(19) Europäisches Patentamt / European Patent Office / Office européen des brevets

(11) **EP 3 859 840 A1**

(12) **EUROPEAN PATENT APPLICATION**
published in accordance with Art. 153(4) EPC

(43) Date of publication:
04.08.2021 Bulletin 2021/31

(21) Application number: 19867480.6

(22) Date of filing: 19.09.2019

(51) Int Cl.:
$H01M\ 4/525^{(2010.01)}$     $C01G\ 53/00^{(2006.01)}$
$H01M\ 4/131^{(2010.01)}$     $H01M\ 4/505^{(2010.01)}$
$H01M\ 4/587^{(2010.01)}$     $H01M\ 10/0525^{(2010.01)}$

(86) International application number:
PCT/JP2019/036810

(87) International publication number:
WO 2020/066846 (02.04.2020 Gazette 2020/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.09.2018 JP 2018185095

(71) Applicant: Panasonic Intellectual Property
Management Co., Ltd.
Osaka-shi, Osaka 540-6207 (JP)

(72) Inventors:
• TSUJI, Tomoki
  Osaka-shi, Osaka 540-6207 (JP)
• OGASAWARA, Takeshi
  Osaka-shi, Osaka 540-6207 (JP)
• TAKEUCHI, Masanobu
  Osaka-shi, Osaka 540-6207 (JP)
• FUKAMICHI, Noriko
  Osaka-shi, Osaka 540-6207 (JP)

(74) Representative: Vigand, Philippe et al
Novagraaf International SA
Chemin de l'Echo 3
1213 Onex - Genève (CH)

(54) **NONAQUEOUS ELECTROLYTE SECONDARY BATTERY**

(57) A nonaqueous electrolyte secondary battery includes: a positive electrode containing a positive electrode active material; a negative electrode containing a negative electrode active material; and a nonaqueous electrolyte. The positive electrode active material includes a complex oxide containing lithium and metal M excluding lithium, where a plurality of primary particles of the complex oxide are aggregated to form a secondary particle. The metal M includes at least nickel and aluminum and/or manganese, where an atomic ratio of nickel to the metal M (Ni/M) is 0.8 or more and less than 1.0. The primary particles have an average particle size of 0.20 $\mu$m or more and 0.35 $\mu$m or less.

Figure 1

EP 3 859 840 A1

**Description**

[Technical Field]

The present invention relates to a nonaqueous electrolyte secondary battery.

[Background Art]

A nonaqueous electrolyte secondary battery, typified by a lithium rechargeable battery, includes a positive electrode, a negative electrode, and a nonaqueous electrolyte, where the positive electrode contains a lithium complex oxide as a positive electrode active material. For such a lithium complex oxide, for example, lithium nickel oxide favorable to higher capacity is used by substituting part of nickel with a different metal, such as aluminum (Patent Literature (PTL) 1).

[Citation List]

[Patent Literature]

PTL 1: Japanese Published Unexamined Patent Application No. 2017-226576

[Summary of Invention]

In a positive electrode active material, a plurality of primary particles of a lithium complex oxide are generally aggregated to form each secondary particle. Through expansion and contraction of the positive electrode active material during charging and discharging, the binding force between primary particles decreases to cause cracking of secondary particles at the interface between primary particles, thereby further isolating primary particles. Consequently, cycle characteristics deteriorate in some cases.

Meanwhile, as the performance of electronic devices and the like increases, there is a need for higher capacity and improved cycle characteristics of a nonaqueous electrolyte secondary battery used as a power source for such devices.

In view of the above, an aspect of the present invention relates to a nonaqueous electrolyte secondary battery including: a positive electrode containing a positive electrode active material; a negative electrode containing a negative electrode active material; and a nonaqueous electrolyte, where the positive electrode active material includes a complex oxide containing lithium and metal M excluding lithium; a plurality of primary particles of the complex oxide are aggregated to form a secondary particle; the metal M includes at least nickel and aluminum and/or manganese; an atomic ratio of nickel to the metal M (Ni/M) is 0.8 or more and less than 1.0; and the primary particles have an average particle size of 0.20 $\mu$m or more and 0.35 $\mu$m or less.

According to the present invention, it is possible to obtain a nonaqueous electrolyte secondary battery having high capacity and excellent cycle characteristics.

[Brief Description of Drawing]

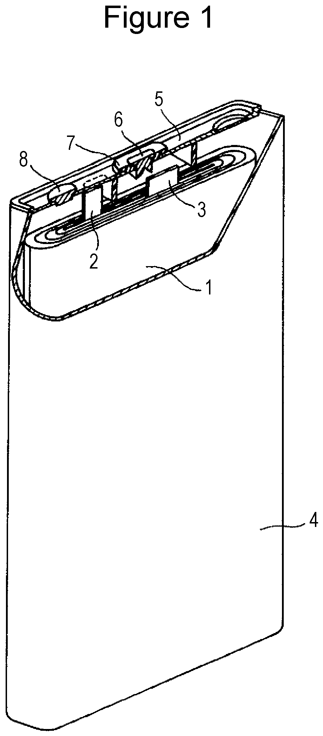

[Figure 1] Figure 1 is a schematic perspective view of a partially cut nonaqueous electrolyte secondary battery according to an embodiment of the present invention.

[Description of Embodiments]

A nonaqueous electrolyte secondary battery according to an embodiment of the present invention includes: a positive electrode containing a positive electrode active material; a negative electrode containing a negative electrode active material; and a nonaqueous electrolyte. The positive electrode active material includes a complex oxide containing lithium and metal M excluding lithium, where a plurality of primary particles of the complex oxide are aggregated to form a secondary particle. The metal M includes at least nickel (Ni) and aluminum (Al) and/or manganese (Mn), where an atomic ratio of nickel to the metal M (Ni/M) is 0.8 or more and less than 1.0. The primary particles have an average particle size of 0.20 $\mu$m or more and 0.35 $\mu$m or less.

When the above-described constitution is satisfied, lowering in binding force between primary particles due to expansion and contraction of the positive electrode active material during charging and discharging is suppressed, thereby suppressing cracking of secondary particles at the interface between primary particles as well as the resulting isolation of primary particles. Consequently, cycle characteristics are enhanced. In addition, high capacity (initial capacity) is attained.

When Ni/M is 0.8 or more, high capacity is attained due to a large amount of Ni. Meanwhile, when Ni/M is 1, cycle characteristics deteriorate since the metal M includes neither Al nor Mn.

By including Al and/or Mn in the metal M, the binding force between primary particles is increased. It is presumed that a complex oxide containing Li and at least either Al or Mn, which is present near the surface of primary particles, contributes to the increase in binding force between primary particles. Al and Mn are also advantageous in terms of thermal stability.

When primary particles of a positive electrode active material (complex oxide) have an average particle size of 0.20 $\mu$m or more and 0.35 $\mu$m or less, high capacity and excellent cycle characteristics are attained. When primary particles have an average particle size of more than 0.35 $\mu$m, the absolute amounts of expansion and contraction of primary particles through charging and discharging increase. Consequently, even if Al and/or Mn are included in a complex oxide (metal M), cycle characteristics tend to deteriorate due to insufficient binding force between primary particles. Meanwhile, when primary particles have an average particle size of less than 0.20 $\mu$m, insufficient crystal growth increases a portion that does not contribute to charge-discharge reactions. This tends to lower capacity and impair cycle characteristics.

The average particle size of primary particles of a positive electrode active material is obtained as follows.

A cross-sectional image of a positive electrode active material is obtained using a scanning electron microscope (SEM). For example, a positive electrode is buried in a resin, a cross-section of a positive electrode mixture layer is formed, for example, by processing with Cross Section Polisher (CP), and the resulting cross-section is imaged under an SEM. Alternatively, positive electrode active material powder is buried in a resin, a cross-section of positive electrode active material particles is formed, for example, by processing with Cross Section Polisher (CP), and the resulting cross-section may be imaged under an SEM. About 1 to 3 secondary particles are arbitrarily selected on the obtained image, 100 or more primary particles are arbitrarily selected therefrom, each equivalent circle diameter is obtained through image analysis, and the average particle size of primary particles is obtained on the basis of the resulting respective equivalent circle diameters.

Concretely, an equivalent circle diameter $D_k$ of kth primary particle arbitrarily selected through image analysis is obtained. Assuming that the kth primary particle is a sphere of $D_k/2$ in radius, the volume $V_k$ of the primary particle is obtained by the following formula.

$$V_k = (4\pi/3) \times (D_k/2)^3$$

By using volumes $V_1$, $V_2$, ..., $V_n$ each obtained for n (n is integer of 100 or more) primary particles, an average volume $V_a$ is obtained by the following formula.

$$\text{Average volume } V_a = (\Sigma V_k)/n$$

where $\Sigma V_k = V_1 + V_2 + ... + V_n$.

By using the obtained average volume $V_a$, the average particle size $D_a$ of primary particles is obtained by the following formula.

$$\text{Average particle size } D_a = 2 \times (3/4\pi \times V_a)^{1/3}$$

From a viewpoint of attaining stable cycle characteristics, the degree of dispersion in particle size for primary particles of a positive electrode active material is preferably 5% or less. To control the degree of dispersion to 5% or less, it is desirable, for example, to elevate the temperature under relatively mild conditions (temperature rising rate of 2°C/min to 5°C/min, for example) in the temperature rising process during firing for the production of a positive electrode active material.

The degree of dispersion in particle size of primary particles is obtained as follows.

By using the volumes $V_1$, $V_2$, ..., $V_n$ obtained for n primary particles in the above-described process of obtaining the average particle size of primary particles as well as the average volume $V_a$, a dispersion $V_v$ is obtained by the following formula.

$$\text{Dispersion } V_v = (1/n) \times \Sigma(V_k - V_a)^2$$

where $\Sigma(V_k - V_a)^2 = (V_1 - V_a)^2 + (V_2 - V_a)^2 + ... + (V_n - V_a)^2$.

By using the resulting dispersion $V_v$, a standard deviation $S_v$ is obtained by the following formula.

$$\text{Standard deviation } S_v = (V_v)^{1/2}$$

By using the resulting standard deviation $S_v$ and the average volume $V_a$, the degree of dispersion is obtained by the following formula.

$$\text{Degree of dispersion} = (S_v/V_a)^{1/3} \times 100$$

A proportion of Al and/or Mn present is preferably higher in the surface portion (interface) than in the inner portion of primary particles. In such a case, a complex oxide that contains Li and at least either Al or Mn at the interface of primary particles exists in large numbers, thereby efficiently increasing the binding force between primary particles. In this case, the inner hardness of primary particles and the binding force in the surface portion (interface) of primary particles are well balanced, thereby further enhancing cycle characteristics.

By the production method for a positive electrode active material described hereinafter, it is possible to increase the proportion of Al and/or Mn present in the surface portion compared with the inner portion of primary particles. Such a concentration gradient of Al or Mn within primary particles can be confirmed by energy-dispersive X-ray spectroscopy (EDX), for example. The concentration gradient tends to result when Al or Mn is used in large numbers (when Al/M is 0.04 or more or when Mn/M is 0.01 or more, for example).

When the metal M includes Al, an atomic ratio of Al to the metal M (Al/M) is preferably 0.04 or more and 0.07 or less. When Al/M is 0.04 or more, the binding force between primary particles of a positive electrode active material is further increased, thereby further enhancing cycle characteristics. Meanwhile, when Al/M is 0.07 or less, the capacity is further increased.

When the metal M includes Mn, an atomic ratio of Mn to the metal M (Mn/M) is preferably 0.01 or more and 0.07 or less. When Mn/M is 0.01 or more, the binding force between primary particles of a positive electrode active material is further increased, thereby further enhancing cycle characteristics. Meanwhile, when Mn/M is 0.07 or less, the capacity is further increased.

When the metal M includes Al and Mn, the total atomic ratio of Al and Mn to the metal M [(Al + Mn)/M] is preferably 0.01 or more and 0.15 or less.

The metal M may include other metals in addition to Ni, Al, and Mn. Other metals include, for example, at least one selected from the group consisting of Co, Mg, Fe, Cu, Zn, Cr, Ti, Nb, Zr, V, W, Ta, Mo, Si, and B. Among these elements, Co is preferable from a viewpoint of enhancing cycle characteristics.

The complex oxide is, for example, a rock salt-type complex oxide having a layered structure and may be represented by a general formula, such as $Li_aNi_{1-b}Al_bO_2$, $Li_aNi_{1-c}Mn_cO_2$, or $Li_aNi_{1-d-e-f}Co_dAl_eMn_fO_2$, where $0.9 \leq a \leq 1.2$, $0 < b \leq 0.2$, $0 < c \leq 0.2$, $0 < e + f$, and $0 < d + e + f \leq 0.2$. Here, the value "a" representing the amount of Li is a value in a battery in the discharged state (state of charge (SOC) of 0%), for example, and increases and decreases through charging and discharging.

Exemplary production methods for a positive electrode active material (complex oxide containing lithium and metal M excluding lithium) include a method of mixing a lithium compound with a compound that has been obtained through coprecipitation or the like and that contains metal M, followed by firing of the resulting mixture under predetermined conditions. To the mixture, aluminum oxide and/or manganese oxide powder may be added further. Consequently, much Al and/or Mn are readily distributed at the interface between primary particles. Exemplary lithium compounds include lithium hydroxide and lithium carbonate. Exemplary compounds containing the metal M include hydroxides containing the metal M and oxides containing the metal M. In a positive electrode active material obtained by the above-described production method, a plurality of primary particles are aggregated to form each secondary particle.

The average particle size (D50) of secondary particles of a positive electrode active material is 5 $\mu$m or more and 20 $\mu$m or less, for example. Herein, the average particle size (D50) indicates a median diameter at 50% cumulative volume in volume-based particle size distribution. The average particle size (D50) of secondary particles is obtained through particle size distribution measurement by laser diffractometry.

The average particle size of primary particles of a positive electrode active material can be adjusted, for example, by changing firing conditions (firing temperature, firing time, and so forth). The firing time is 5 hours or more and 20 hours or less, for example. The firing temperature is 650°C or higher and 850°C or lower, for example. Firing is preferably performed in an oxygen atmosphere (oxygen concentration of 30% or more, for example).

The composition of a positive electrode active material can be adjusted, for example, by changing the composition of a compound containing the metal M.

The cycle characteristics of a battery is typically dominated by deterioration in positive electrode. Meanwhile, since the above-described positive electrode active material has a high binding force between primary particles, deterioration in positive electrode is significantly suppressed. Consequently, the cycle characteristics of a battery can become affected by slight deterioration in negative electrode. In this case, to further highly enhance cycle characteristics, it is important to improve a negative electrode and suppress deterioration thereof. Regarding this, when a negative electrode active material contains graphite, cycle characteristics are further improved by setting the BET specific surface area of the graphite to 2 m$^2$/g or less, thereby reducing side reactions at a negative electrode.

When the BET specific surface area of graphite is 2 m$^2$/g or less, deterioration in negative electrode due to side reactions is suppressed. Consequently, the utilization ratio of a positive electrode active material increases. In general, when the utilization ratio of a positive electrode active material increases, the degree of expansion and contraction of the positive electrode active material increases. Consequently, a positive electrode tends to deteriorate due to lowering in binding force between primary particles.

Meanwhile, the present invention uses a complex oxide of predetermined composition for a positive electrode active material and sets the average particle size of primary particles within a predetermined range. Consequently, the binding force between primary particles increases, thereby suppressing deterioration in positive electrode due to lowering in binding force between primary particles. Accordingly, the combination of the above-described positive electrode active material and graphite having a BET specific surface area of 2 m$^2$/g or less further enhances cycle characteristics specifically.

The positive electrode includes, for example, a positive electrode current collector and a positive electrode mixture layer that is supported on the positive electrode current collector and that contains a positive electrode active material. Here, the positive electrode mixture layer may contain 3.2 g or more of the positive electrode active material per 1 cm$^3$ of the positive electrode mixture layer. In this case, it is possible to obtain a battery having excellent cycle characteristics as well as higher energy density.

In general, when the amount of a positive electrode active material contained in a positive electrode mixture layer is 3.2 g or more per 1 cm$^3$ of the positive electrode mixture layer, the stress arising within the positive electrode mixture layer increases through expansion and contraction of the positive electrode active material during charging and discharging. Consequently, secondary particles are readily susceptible to cracking at the interface between primary particles, and cycle characteristics tend to deteriorate.

In contrast, the present invention uses a complex oxide of predetermined composition for a positive electrode active material and sets the average particle size of primary particles within a predetermined range. Consequently, the binding force between primary particles of the positive electrode active material is increased. Accordingly, even when the amount of a positive electrode active material contained in a positive electrode mixture layer is 3.2 g or more per 1 cm$^3$ of the positive electrode mixture layer, cycle characteristics are enhanced due to suppressed cracking of secondary particles at the interface between primary particles.

Hereinafter, the configuration of a nonaqueous electrolyte secondary battery will be described in detail.

(Positive Electrode)

A positive electrode includes, for example, a positive electrode current collector and a positive electrode mixture layer formed on the surface of the positive electrode current collector. The positive electrode mixture layer can be formed by applying a positive electrode slurry, in which a positive electrode mixture is dispersed in a dispersing medium, to the surface of a positive electrode current collector, followed by drying. The resulting coating after drying may be rolled as necessary. The positive electrode mixture layer may be formed on either surface of the positive electrode current collector or may be formed on both the surfaces. The positive electrode mixture contains a positive electrode active material as an essential component and may contain a binder, a conductive agent, and a thickener, for example, as optional components.

Exemplary binders include resin materials, for example, fluoropolymers, such as polytetrafluoroethylene and polyvinylidene fluoride (PVDF); polyolefin resins, such as polyethylene and polypropylene; polyamide resins, such as aramid resins; polyimide resins, such as polyimides and polyamide-imides; acrylic resins, such as polyacrylic acid, polymethyl acrylate, and ethylene-acrylic acid copolymer; vinyl resins, such as polyacrylonitrile and polyvinyl acetate; polyvinylpyrrolidone; polyether sulfones; and rubber materials, such as styrene-butadiene rubber (SBR). These binders may be used alone or in combination.

Exemplary conductive agents include graphite, such as natural graphite or artificial graphite; carbon black, such as acetylene black; conductive fibers, such as carbon fibers and metal fibers; fluorinated carbon; metal powder, such as aluminum; conductive whiskers, such as zinc oxide and potassium titanate; conductive metal oxides, such as titanium oxide; and organic conductive materials, such as phenylene derivatives. These conductive agents may be used alone or in combination.

Exemplary thickeners include cellulose derivatives (cellulose ethers, for example), such as carboxymethyl cellulose (CMC), modified carboxymethyl cellulose (including salts, such as Na salt), and methyl cellulose; saponified polymers having vinyl acetate units, such as polyvinyl alcohol; and polyethers (polyalkylene oxides, such as polyethylene oxide, for example). These thickeners may be used alone or in combination.

As the positive electrode current collector, a nonporous conductive substrate (metal foil, for example) or a porous conductive substrate (mesh, net, and punching sheet, for example) may be used. Exemplary materials for the positive electrode current collector include stainless steel, aluminum, aluminum alloys, and titanium. The thickness of the positive electrode current collector is not particularly limited and is 3 to 50 $\mu$m, for example.

Exemplary dispersing media include, but are not particularly limited to, water; alcohols, such as ethanol; ethers, such as tetrahydrofuran; amides, such as dimethylformamide; N-methyl-2-pyrrolidone (NMP); and mixed solvents thereof.

(Negative Electrode)

A negative electrode includes, for example, a negative electrode current collector and a negative electrode mixture layer formed on the surface of the negative electrode current collector. The negative electrode mixture layer can be formed by applying a negative electrode slurry, in which a negative electrode mixture is dispersed in a dispersing medium, to the surface of a negative electrode current collector, followed by drying. The resulting coating after drying may be rolled as necessary. The negative electrode mixture layer may be formed on either surface of the negative electrode current collector or may be formed on both the surfaces. The negative electrode mixture contains a negative electrode active material as an essential component and may contain a binder, a conductive agent, and a thickener, for example, as optional components. For the binder, the thickener, and the dispersing medium, the exemplary materials illustrated for the positive electrode may be used. Moreover, for the conductive agent, the exemplary materials illustrated for the positive electrode excluding graphite may be used.

Exemplary negative electrode active materials include carbon materials; silicon; silicon compounds, such as silicon oxide; and lithium alloys containing at least one selected from the group consisting of tin, aluminum, zinc, and magnesium. Exemplary carbon materials include graphite (natural graphite or artificial graphite, for example) and amorphous carbon.

As the negative electrode current collector, a nonporous conductive substrate (metal foil, for example) or a porous conductive substrate (mesh, net, and punching sheet, for example) may be used. Exemplary materials for the negative electrode current collector include stainless steel, nickel, nickel alloys, copper, and copper alloys. The thickness of the negative electrode current collector is not particularly limited but is preferably 1 to 50 $\mu$m and more desirably 5 to 20 $\mu$m in view of the balance between weight reduction and strength of a negative electrode.

(Separator)

Between a positive electrode and a negative electrode, a separator is commonly and desirably disposed. The separator has a high ion permeability as well as appropriate mechanical strength and insulating properties. For such a separator, a microporous membrane, a woven fabric, or a nonwoven fabric, for example, may be used. As the materials for a separator, polyolefins, such as polyethylene and polypropylene, are preferable.

An exemplary configuration of a nonaqueous electrolyte secondary battery is a configuration in which a nonaqueous electrolyte and an electrode assembly composed of a positive electrode and a negative electrode wound via a separator are held within a case. Alternatively, in place of the wound electrode assembly, an electrode assembly in another form, such as a stacked electrode assembly composed of positive electrodes and negative electrodes stacked via separators, may be employed. A nonaqueous electrolyte secondary battery may be in any form, for example, a cylindrical type, a prismatic type, a coin type, a button type, a laminate type, and so forth.

Figure 1 is a schematic perspective view of a partially cut prismatic nonaqueous electrolyte secondary battery according to an embodiment of the present invention.

The battery includes a flat-bottomed rectangular battery case 4 as well as an electrode assembly 1 and a nonaqueous electrolyte (not illustrated) held within the battery case 4. The electrode assembly 1 includes a long strip of negative electrode, a long strip of positive electrode, and a separator disposed between the electrodes for preventing direct contact thereof. The electrode assembly 1 is formed by winding a negative electrode, a positive electrode, and a separator around a plate core, followed by pulling out of the core.

One end of a negative electrode lead 3 is fixed by welding or the like to a negative electrode current collector of the negative electrode. The other end of the negative electrode lead 3 is electrically connected with a negative electrode terminal 6 provided on a seal 5 through a resin insulating sheet (not illustrated). The negative electrode terminal 6 is insulated from the seal 5 by a resin gasket 7. One end of a positive electrode lead 2 is fixed by welding or the like to a positive electrode current collector of the positive electrode. The other end of the positive electrode lead 2 is connected with the rear surface of the seal 5 through the insulating sheet. In other words, the positive electrode lead 2 is electrically connected with the battery case 4 that also acts as a positive electrode terminal. The insulating sheet isolates the electrode assembly 1 from the seal 5 as well as isolates the negative electrode lead 3 from the battery case 4. The periphery of the seal 5 is fitted into the opening end of the battery case 4 and the fitted portion is laser-welded. The opening of the battery case 4 is thus closed with the seal 5. A feed port for a nonaqueous electrolyte provided on the seal 5 is filled with a sealing plug 8.

[EXAMPLES]

Hereinafter, the present invention will be concretely described on the basis of Examples and Comparative Examples. However, the present invention is by no means limited to the following Examples.

<< Examples 1 to 3, Comparative Examples 1 and 2 >>

(1) Production of Positive Electrode Active Material

A positive electrode active material (complex oxide) was obtained by mixing $Li_2CO_3$ with $Ni_{0.82}Co_{0.15}Al_{0.03}(OH)_2$ prepared through coprecipitation at an atomic ratio of Li to the total of Ni, Co, and Al [Li/(Ni + Co + Al)] of 1.05/1, followed by firing in an oxygen atmosphere. The temperature rising rate in the temperature rising process during firing was set to 5°C/min or less. The composition of the positive electrode active material was $Li_{0.05}Ni_{0.82}Co_{0.15}Al_{0.03}O_2$. Here, the composition of the positive electrode active material was obtained by ICP atomic emission spectroscopy.

(2) Production of Positive Electrode

A positive electrode slurry was prepared by mixing the positive electrode active material, acetylene black, and polyvinylidene fluoride at a mass ratio of 100:2:2, adding N-methyl-2-pyrrolidone (NMP) to the resulting mixture, and stirring using a mixer (from Primix Corporation, T.K. HIVIS MIX). The positive electrode slurry was applied to the surfaces of an aluminum foil, and the resulting coatings were rolled after drying to produce a positive electrode in which a positive electrode mixture layer (density of 3.6 $g/cm^3$) was formed on both surfaces of the aluminum foil.

(3) Production of Negative Electrode

A negative electrode slurry was prepared by mixing a negative electrode active material, carboxymethyl cellulose sodium salt (CMC-Na), and styrene-butadiene rubber (SBR) at a mass ratio of 100:1:1, adding water to the resulting mixture, and then stirring using a mixer (from Primix Corporation, T.K. HIVIS MIX). The negative electrode slurry was applied to the surfaces of a copper foil, and the resulting coatings were rolled after drying to produce a negative electrode in which a negative electrode mixture layer (density of 1.7 $g/cm^3$) was formed on both surfaces of the copper foil. For the negative electrode active material, graphite powder (average particle size of 20 $\mu$m) having a BET specific surface area of 1.4 $m^2/g$ was used.

(4) Preparation of Nonaqueous Electrolyte

A nonaqueous electrolyte was prepared by dissolving $LiPF_6$ at a concentration of 1.6 mol/L in a mixed solvent (volume ratio of 1:1) of ethylene carbonate (EC) and diethyl carbonate (DEC).

(5) Production of Nonaqueous Electrolyte Secondary Battery

One end of an aluminum positive electrode lead was fixed to the positive electrode obtained as above, and one end of a nickel negative electrode lead was fixed to the negative electrode obtained as above. A wound electrode assembly was produced by winding the positive electrode and the negative electrode via a polyethylene separator. The electrode assembly was dried under vacuum at 105°C for 2 hours and then held within a flat-bottomed cylindrical battery case that also acts as a negative electrode terminal. For the battery case, an iron case (outer diameter of 18 mm, height of 65 mm) was used. Subsequently, the nonaqueous electrolyte was fed into the battery case, and then the opening of the battery case was closed with a metal seal that also acts as a positive electrode terminal. On this occasion, a resin gasket was disposed between the seal and the opening end of the battery case. The other end of the positive electrode lead was connected with the seal, and the other end of the negative electrode lead was connected with the inner bottom surface of the battery case. A 18650 cylindrical nonaqueous electrolyte secondary battery was thus produced.

In the above-described production of a positive electrode active material, positive electrode active materials a1 to a3, b1, and b2 having an average particle size of primary particles as the value shown in Table 1 were obtained. The average particle size of primary particles of each positive electrode active material was obtained by the foregoing method. The average particle size of primary particles of each positive electrode active material was adjusted by changing the firing temperature within the range of 700°C or higher and 800°C or lower and the firing time within the range of 5 hours or more and 10 hours or less for the mixture of $Ni_{0.82}Co_{0.15}Al_{0.03}(OH)_2$ and $Li_2CO_3$. The average particle size (D50) of secondary particles obtained by the foregoing method was about 12 $\mu$m for all the positive electrode active materials a1 to a3, b1, and b2.

The degree of dispersion in particle size of primary particles obtained by the foregoing method was about 1% for all the positive electrode active materials a1 to a3. Moreover, through investigation into the distribution of Al within primary particles by energy-dispersive X-ray spectroscopy (EDX), it was confirmed that a proportion of Al present was higher in the surface portion (interface between primary particles) than in the inner portion of primary particles for all the positive electrode active materials a1 to a3.

Nonaqueous electrolyte secondary batteries A1 to A3, B1, and B2 were produced by using the respective positive electrode active materials a1 to a3, b1, and b2.

Each battery A1 to A3, B1, and B2 was evaluated as follows.

[Evaluation]

(A) Initial Capacity

< Charging >

In an environment of 25°C, each battery was charged at a constant current of 0.2C to a voltage of 4.2 V and then charged at a constant voltage of 4.2 V to a current of 0.02C, followed by resting for 20 minutes.

< Discharging >

In an environment of 25°C, the battery after resting was discharged at a constant current of 0.2C to a voltage of 2.5 V, and the initial discharge capacity (initial capacity) was obtained. Herein, the initial capacity is expressed as an index based on 100 for the initial capacity of battery B1 of Comparative Example 1.

(B) Capacity Retention Ratio

< Charging >

In an environment of 45°C, each battery was charged at a constant current of 0.5C to a voltage of 4.3 V, followed by resting for 20 minutes.

< Discharging >

In an environment of 45°C, the battery after resting was discharged at a constant current of 0.5C to a voltage of 2.5 V.

The above-described charging and discharging were repeated to obtain the discharge capacity $C_1$ in the first cycle and the discharge capacity $C_2$ in the 500th cycle.

The capacity retention ratio was obtained by the following formula using the discharge capacity $C_1$ and discharge capacity $C_2$ obtained as above.

$$\text{Capacity retention ratio (\%)} = (\text{discharge capacity } C_2/\text{discharge capacity } C_1) \times 100$$

(C) Change in Resistance

One cycle of charging and discharging in (B) above was performed. Subsequently, in an environment of 25°C, each battery was charged at a constant current of 0.2C to a voltage of 4.2 V and then charged at a constant voltage of 4.2 V to a current of 0.02C. A battery with SOC of 100% was thus obtained.

After charging, the battery was rested for 20 minutes and then discharged at a constant current I of 0.5C. A value ($\Delta V/I$), which is a difference $\Delta V$ between the voltage immediately before staring discharging and the voltage 10 seconds after staring discharging is divided by the current I, was obtained and regarded as direct current resistance $R_1$.

A separately produced battery was prepared and subjected to 500 cycles of charging and discharging in (B) above. Subsequently, the battery was charged and discharged in the same manner as described above, and $\Delta V/I$ was obtained as direct current resistance $R_2$.

The change in resistance was obtained by the following formula using direct current resistance $R_1$ and direct current resistance $R_2$ obtained as above.

$$\text{Change in resistance (\%)} = (\text{direct current resistance } R_2/\text{direct current resistance } R_1) \times 100$$

<< Examples 4 to 6, Comparative Examples 3 and 4 >>

A positive electrode active material (complex oxide) was obtained by mixing $Li_2CO_3$ with $Ni_{0.82}Co_{0.13}Al_{0.05}(OH)_2$ prepared through coprecipitation at an atomic ratio of Li to the total of Ni, Co, and Al [Li/(Ni + Co + Al)] of 1.05/1, followed by firing in an oxygen atmosphere. The temperature rising rate in the temperature rising process during firing was set to 5°C/min or less. The composition of the positive electrode active material was $Li_{1.05}Ni_{0.82}Co_{0.13}Al_{0.05}O_2$.

In the above-described production of a positive electrode active material, positive electrode active materials a4 to a6, b3, and b4 having an average particle size of primary particles as the value shown in Table 1 were obtained. The average particle size of primary particles of each positive electrode active material was obtained by the foregoing method. The average particle size of primary particles of each positive electrode active material was adjusted by changing the firing temperature within the range of 700°C or higher and 800°C or lower and the firing time within the range of 5 hours or more and 10 hours or less for the mixture of $Ni_{0.82}Co_{0.13}Al_{0.05}(OH)_2$ and $Li_2CO_3$. The average particle size (D50) of secondary particles obtained by the foregoing method was about 12 $\mu$m for all the positive electrode active materials a4 to a6.

The degree of dispersion in particle size of primary particles obtained by the foregoing method was about 1% for all the positive electrode active materials a4 to a6. Moreover, it was confirmed by EDX that a proportion of Al present was higher in the surface portion (interface between primary particles) than in the inner portion of primary particles of the positive electrode active materials a4 to a6.

Batteries A4 to A6, B3, and B4 were produced and evaluated in the same manner as Example 1 except for using the respective positive electrode active materials a4 to a6, b3, and b4 in place of the positive electrode active material a1.

The evaluation results of the batteries A1 to A6 and B1 to B4 are shown in Table 1.

[Table 1]

| Battery No. | Positive electrode active material No. | Positive electrode active material | | Negative electrode active material | Evaluation | | |
|---|---|---|---|---|---|---|---|
| | | Ni/Co/Mn/Al compositional ratio | Average particle size of primary particles ($\mu$m) | BET specific surface area ($m^2/g$) | Initial capacity (index) | Capacity retention ratio (%) | Change in resistance (%) |
| B1 | b1 | 82/15/0/3 | 0.40 | 1.4 | 100 | 92.4 | 121 |
| A1 | a1 | 82/15/0/3 | 0.35 | 1.4 | 101 | 93.4 | 113 |
| A2 | a2 | 82/15/0/3 | 0.25 | 1.4 | 100 | 93.6 | 112 |
| A3 | a3 | 82/15/0/3 | 0.20 | 1.4 | 102 | 93.8 | 113 |
| B2 | b2 | 82/15/0/3 | 0.15 | 1.4 | 90 | - | - |
| B3 | b3 | 82/13/0/5 | 0.40 | 1.4 | 97 | 90.4 | 124 |
| A4 | a4 | 82/13/0/5 | 0.35 | 1.4 | 96 | 94.2 | 109 |
| A5 | a5 | 82/13/0/5 | 0.25 | 1.4 | 96 | 94.4 | 107 |
| A6 | a6 | 82/13/0/5 | 0.20 | 1.4 | 96 | 94.5 | 105 |
| B4 | b4 | 82/13/0/5 | 0.15 | 1.4 | 88 | - | - |

The batteries A1 to A6, in which the positive electrode active material has Ni/M of 0.8 or more and less than 1 and an average particle size of primary particles of 0.2 μm or more and 0.35 μm or less, exhibited a high initial capacity as well as a high capacity retention ratio and a low change in resistance. In the batteries A1 to A6, cracking of secondary particles at the interface between primary particles through repeated charging and discharging was suppressed.

In the batteries B 1 and B3, in which the positive electrode active material has an average particle size of primary particles of more than 0.35 μm, the absolute amounts of expansion and contraction of primary particles through charging and discharging increase, thereby resulting in insufficient binding force between primary particles. Consequently, the capacity retention ratio was lowered and the change in resistance increased.

In the batteries B2 and B4, in which the positive electrode active material has an average particle size of primary particles of less than 0.2 μm, the initial capacity was lowered due to insufficient crystal growth of primary particles.

<< Example 7 >>

A positive electrode active material a7 was produced in the same manner as Example 1 except for mixing $Li_2CO_3$ with $Ni_{0.82}Co_{0.12}Mn_{0.06}(OH)_2$ prepared through coprecipitation at an atomic ratio of Li to the total of Ni, Co, and Mn [Li/(Ni + Co + Mn)] of 1.05/1. The composition of the positive electrode active material was $Li_{1.05}Ni_{0.82}Co_{0.12}Mn_{0.06}O_2$.

The average particle size of primary particles obtained by the foregoing method was 0.35 μm for the positive electrode active material a7. The average particle size (D50) of secondary particles obtained by the foregoing method was about 12 μm for the positive electrode active material a7. The degree of dispersion in particle size of primary particles obtained by the foregoing method was about 1% for the positive electrode active material a7. It was confirmed by EDX that a proportion of Mn present was higher in the surface portion (interface between primary particles) than in the inner portion of primary particles of the positive electrode active material a7.

A battery A7 was produced and evaluated in the same manner as Example 1 except for using the positive electrode active material a7 in place of the positive electrode active material a1. The evaluation results of the battery A7 are shown in Table 2 together with the batteries A1 and A4.

[Table 2]

| Battery No. | Positive electrode active material No. | Positive electrode active material | | Negative electrode active material | Evaluation | | |
|---|---|---|---|---|---|---|---|
| | | Ni/Co/Mn/Al compositional ratio | Average particle size of primary particles (μm) | BET specific surface area (m²/g) | Initial capacity (index) | Capacity retention ratio (%) | Change in resistance (%) |
| A1 | a1 | 82/15/0/3 | 0.35 | 1.4 | 100 | 93.4 | 113 |
| A4 | a4 | 82/13/0/5 | 0.35 | 1.4 | 96 | 94.2 | 109 |
| A7 | a7 | 82/12/6/0 | 0.35 | 1.4 | 103 | 94.0 | 109 |

The battery A4 having Al/M of 0.04 or more and 0.07 or less exhibited a higher capacity retention ratio and a lower change in resistance than the battery A1 having Al/M of less than 0.04.

The battery A7 having Mn/M of 0.01 or more and 0.07 or less exhibited a high initial capacity as well as a high capacity retention ratio and a low change in resistance at levels comparable to the battery A4.

<< Examples 8 and 9 >>

Batteries A8 and A9 were produced and evaluated in the same manner as Example 1 except for using, as a negative electrode active material, graphite powder having a BET specific surface area of the value shown in Table 3.

<< Examples 10 and 11 >>

Batteries A10 and A11 were produced and evaluated in the same manner as Example 4 except for using, as a negative electrode active material, graphite powder having a BET specific surface area of the value shown in Table 3.

The evaluation results of the batteries A8 to A11 are shown in Table 3 together with the batteries A1 and A4.

[Table 3]

| Battery No. | Positive electrode active material No. | Positive electrode active material | | Negative electrode active material | Evaluation | | |
|---|---|---|---|---|---|---|---|
| | | Ni/Co/Mn/Al compositional ratio | Average particle size of primary particles (μm) | BET specific surface area (m²/g) | Initial capacity (index) | Capacity retention ratio (%) | Change in resistance (%) |
| A1 | a1 | 82/15/0/3 | 0.35 | 1.4 | 100 | 93.4 | 113 |
| A8 | a1 | 82/15/0/3 | 0.35 | 2.0 | 100 | 93.2 | 115 |
| A9 | a1 | 82/15/0/3 | 0.35 | 3.9 | 99 | 92.8 | 120 |
| A4 | a4 | 82/13/0/5 | 0.35 | 1.4 | 96 | 94.2 | 109 |
| A10 | a4 | 82/13/0/5 | 0.35 | 2.0 | 95 | 94.0 | 109 |
| A11 | a4 | 82/13/0/5 | 0.35 | 3.9 | 95 | 93.6 | 109 |

The batteries A1 and A8, in which the negative electrode active material has a BET specific surface area of 2.0 m²/g or less, exhibited a higher capacity retention ratio and a lower change in resistance than the battery A9, in which the negative electrode active material has a BET specific surface area of more than 2.0 m²/g.

The batteries A4 and A10, in which the negative electrode active material has a BET specific surface area of 2.0 m²/g or less, exhibited a higher capacity retention ratio than the battery A11, in which the negative electrode active material has a BET specific surface area of more than 2.0 m²/g.

Industrial Applicability

The nonaqueous electrolyte secondary battery of the present invention is suitably used, for example, as a main power source for portable electronic devices and so forth as well as an energy storage device (storage device for natural energy, such as sunlight, for example).

Reference Signs List

1 Electrode assembly
2 Positive electrode lead
3 Negative electrode lead
4 Battery case
5 Seal
6 Negative electrode terminal
7 Gasket
8 Sealing plug

**Claims**

1. A nonaqueous electrolyte secondary battery comprising: a positive electrode containing a positive electrode active material; a negative electrode containing a negative electrode active material; and a nonaqueous electrolyte, wherein the positive electrode active material includes a complex oxide containing lithium and metal M excluding lithium; a plurality of primary particles of the complex oxide are aggregated to form a secondary particle; the metal M includes at least nickel and aluminum and/or manganese; an atomic ratio of nickel to the metal M (Ni/M) is 0.8 or more and less than 1.0; and the primary particles have an average particle size of 0.20 μm or more and 0.35 μm or less.

2. The nonaqueous electrolyte secondary battery according to Claim 1, wherein

a proportion of aluminum and/or manganese present is higher in a surface portion than in an inner portion of the primary particles.

3. The nonaqueous electrolyte secondary battery according to Claim 1 or 2, wherein
the metal M includes aluminum; and
an atomic ratio of aluminum to the metal M (Al/M) is 0.04 or more and 0.07 or less.

4. The nonaqueous electrolyte secondary battery according to any one of Claims 1 to 3, wherein
the metal M includes manganese; and
an atomic ratio of manganese to the metal M (Mn/M) is 0.01 or more and 0.07 or less.

5. The nonaqueous electrolyte secondary battery according to any one of Claims 1 to 4, wherein
the negative electrode active material includes graphite; and
the graphite has a BET specific surface area of 2 $m^2$/g or less.

6. The nonaqueous electrolyte secondary battery according to any one of Claims 1 to 5, wherein
the positive electrode includes a positive electrode current collector and a positive electrode mixture layer that is supported on the positive electrode current collector and that contains the positive electrode active material; and
the positive electrode mixture layer contains 3.2 g or more of the positive electrode active material per 1 $cm^3$ of the positive electrode mixture layer.

# Figure 1

## INTERNATIONAL SEARCH REPORT

| | International application No. |
|---|---|
| | PCT/JP2019/036810 |

### A. CLASSIFICATION OF SUBJECT MATTER

Int.Cl. H01M4/525(2010.01)i, C01G53/00(2006.01)i, H01M4/131(2010.01)i, H01M4/505(2010.01)i, H01M4/587(2010.01)i, H01M10/0525(2010.01)i

According to International Patent Classification (IPC) or to both national classification and IPC

### B. FIELDS SEARCHED

Minimum documentation searched (classification system followed by classification symbols)

Int.Cl. H01M4/525, C01G53/00, H01M4/131, H01M4/505, H01M4/587, H01M10/0525

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2010-80394 A (SUMITOMO METAL MINING CO., LTD.) 08 April 2010, paragraphs [0038]-[0039], [0069], examples 5-8, comparative example 4 (Family: none) | 1, 3-4, 6 |
| Y | | 2, 5 |

☒ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12 December 2019 (12.12.2019) | 24 December 2019 (24.12.2019) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| International application No. |
| --- |
| PCT/JP2019/036810 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X Y | WO 2014/142279 A1 (NISSAN MOTOR CO., LTD.) 18 September 2014, paragraph [0029], examples 2, 4-5, 7, comparative example 3 & US 2016/0036041 A1, paragraph [0035], examples 2, 4-5, 7, comparative example 3 & EP 2975680 A1 & CN 105051952 A & KR 10-2015-0122172 A | 1, 3-4, 6 2, 5 |
| X Y | WO 2017/169184 A1 (PANASONIC IP MANAGEMENT CO., LTD.) 05 October 2017, paragraphs [0026], [0049], [0051], examples 1-2, comparative example 3 & US 2019/0103605 A1, paragraphs [0033], [0056], [0059], examples 1-2, comparative example 3 & CN 108780889 A | 1, 3, 6 2, 5 |
| Y | JP 2016-76470 A (HITACHI METALS, LTD.) 12 May 2016, paragraphs [0017], [0033] & US 2016/0099460 A1, paragraphs [0023]-[0024], [0040] & KR 10-2016-0041004 A | 2 |
| Y | JP 2018-92916 A (JFE CHEMICAL CORPORATION) 14 June 2018, paragraphs [0050], [0053] (Family: none) | 5 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017226576 A